# EUROPÄISCHE PATENTSCHRIFT

(11) **EP 2 100 699 B1**
(45) Veröffentlichungstag und Bekanntmachung des Hinweises auf die Patenterteilung: **09.01.2019**
(21) Anmeldenummer: 09002726.9
(22) Anmeldetag: 26.02.2009
(51) Int. Cl.: B25J 5/02, B25J 9/00, B25J 15/00

(54) **Führungseinheit eines Handhabungsmoduls**
Guide unit of a handling module
Unité de direction d'un module de manipulation

(30) Priorität: 27.02.2008 DE 102008012616
(43) Veröffentlichungstag der Anmeldung: 16.09.2009
(73) Patentinhaber: Schunk GmbH & Co. KG Spann- und Greiftechnik, 74348 Lauffen am Neckar (DE)
(72) Erfinder: Hoch, Andreas, 74388 Talheim (DE); Schleusener, Tobias, 75031 Eppingen (DE); Conz, Thomas, 74336 Brackenheim (DE)
(74) Vertreter: DREISS Patentanwälte PartG mbB

(56) Entgegenhaltungen:
- DE-A1- 3 505 193
- DE-U- 1 919 256
- GB-A- 705 148
- JP-A- H05 123 984
- MAYTEC: "Das Linear System", , 1 January 2006 (2006-01-01), XP055398619, Retrieved from the Internet: URL:http://www.amtek.cz/images/stories/May Tec/Linearni_systemy/L-1-2006-D.pdf [retrieved on 2017-08-14]

## Beschreibung

Die Erfindung betrifft eine Führungseinheit eines Handhabungsmoduls. Handhabungsmodule können dabei insbesondere Linearachsen, Linearantriebe mit einem entlang der Führungseinheit verfahrbaren Tisch oder Schlitten und/oder Greif- oder Spannvorrichtungen, mit entlang der Führungseinheit verfahrbaren Backen sein. Derartige Handhabungsmodule haben gemeinsam, dass sie eine Führungseinheit aufweisen, entlang derer zu führende Bauteile, wie beispielsweise Tische oder Backen, bewegt werden.

Gerade bei größer dimensionierten Linearachsen oder Großhubgreifern kommen Führungseinheiten zur Anwendung, die in der Regel aus speziell gestalteten Aluminiumprofilen realisiert sind. Eine wirtschaftliche Fertigung lohnt sich allerdings nur dann, wenn entsprechend hohe Stückzahlen der jeweiligen Handhabungsmodule realisiert werden. Sollen insbesondere Sonderlösungen mit geringer Stückzahl bereitgestellt werden, ist dies wirtschaftlich kaum realisierbar.

Aus dem Stand der Technik ist beispielsweise bekannt, einteilig ausgebildete Strangpressprofile als Führungseinheiten für Linearantriebe zu verwenden. Je nach Baugröße des Antriebs sind dabei unterschiedlich große Profile vorzusehen.

Aus der DE 35 05 193 A1 ist eine fernbedienbare Trägervorrichtung zur Aufnahme und zum Positionieren von Fernhantierungsgeräten mit einem Gerüst bekannt.

Aus der JP H05 123984 A ist eine Führungseinheit mit Merkmalen des Oberbegriffs des Patentanspruchs 1 bekannt geworden. Bei dieser Führungseinheit sind die Tragstrukturen sowie die Verbindungsteile als einschlägige Einheit miteinander verbunden ausgebildet.

Der Erfindung liegt deshalb die Aufgabe zugrunde, eine Führungseinheit für Handhabungsmodule bereitzustellen, mit der Führungseinheiten, insbesondere in geringerer Stückzahl, wirtschaftlich fertigbar sind.

Diese Aufgabe wird durch eine Führungseinheit mit den Merkmalen des Anspruchs 1 gelöst.

Eine derartige Führungseinheit hat den Vorteil, dass sie durch Verwendung unterschiedlicher Tragestrukturen, Führungsschienen und/oder Verbindungsteilen auf vergleichsweise einfache Art und Weise unterschiedlich dimensioniert werden kann. Ändern sich die Anforderungen an die Führungseinheit, so kann es unter Umständen ausreichen, dass lediglich die Führungsschienen, Tragestrukturen oder die Verbindungsteile auszutauschen sind. Insgesamt ergibt sich eine modulare Bauweise, die auch insbesondere bei geringen Stückzahlen wirtschaftlich ist.

Da die Tragestrukturen als Flachelemente ausgebildet sind, ergibt sich zwischen den parallel angeordneten Tragestrukturen Bauraum. Im Bereich zwischen den Tragestrukturen ist eine Antriebseinheit angeordnet. Mit der Antriebseinheit können beispielsweise ein Bearbeitungstisch oder Backen entlang den Schienen bewegt werden. Dabei sind Verbindungsteile vorgesehen, die zur Halterung der Antriebseinheit oder von Teilen davon ausgebildet sind. Dies hat den Vorteil, dass keine zusätzlichen Halterungsteile für die Antriebseinheit bereitzustellen sind. Vorzugsweise sind wenigstens einzelne Verbindungsteile so ausgebildet, dass sie Befestigungs- oder Lagerabschnitte der Antriebseinheit vorsehen.

Wenn die Tragestrukturen fachwerkartig ausgebildet sind, kann insbesondere eine Gewichtsoptimierung erreicht werden. Vorzugsweise können auch die Verbindungsteile als fachwerkartige Flachelemente ausgebildet sein. Auch hierdurch kann eine vorteilhafte Gewichtsoptimierung realisiert werden.

Die Schienen können insbesondere über Schrauben mit den Tragestrukturen verbunden sein. Entsprechend können die Verbindungsteile über Schraubenverbindungen mit den Tragestrukturen dauerhaft gefügt sein.

Eine weitere Ausführungsform der Erfindung sieht vor, dass jeweils zwei oder mehrere Tragestrukturen und/oder Führungsschienen hintereinander entlang einer Linie angeordnet sind. Gerade bei Linearachsen oder Greifern, die einen vergleichsweise großen Hub zur Verfügung stellen sollen, bietet sich eine solche Ausführungsform an. Dabei kann vorteilhaft sein, wenn mehrere Tragestrukturen hintereinander angeordnet sind, wobei die jeweilige Führungsschiene insbesondere durchgehend entlang den hintereinander angeordneten Tragestrukturen verläuft.

Für den Fall, dass mit der Führungseinheit eine zwei aufeinander zu und voneinander weg bewegbare Backen vorsehende Greifeinrichtung bereitgestellt werden soll, ist vorteilhaft, wenn zwischen den jeweils entlang einer Linie angeordneten Tragestrukturen und/oder Führungsschienen eine Antriebseinheit oder ein Zwischenteil vorgesehen ist. Die Antriebseinheit beziehungsweise das Zwischenteil sitzt dann vorzugsweise mittig zwischen zwei Tragestrukturen. Insbesondere kann es an die Tragestrukturen angeflanscht sein. Die Führungsschienen können dabei durchgehend über jeweils zwei Tragestrukturen und die Antriebseinheit beziehungsweise das Zwischenteil ausgebildet sein. Ebenfalls ist denkbar, dass entlang einer Linie zwei Führungsschienen beabstandet zueinander vorgesehen sind, wobei dann die Antriebseinheit oder ein Zwischenteil zwischen diesen Führungsschienen vorgesehen ist.

Ferner ist vorteilhaft, wenn auf der den Führungsschienen abgewandten Seite an den Tragestrukturen eine den zwischen den parallel zueinander verlaufenden Tragestrukturen liegenden Zwischenraum abdeckende Abdeckung vorgesehen ist. Bei einer derartigen Abdeckung kann es sich insbesondere um ein Abdeckblech handeln, das entlang den den jeweiligen Führungsschienen abgewandten Seiten der Tragestrukturen verläuft.

Vorzugsweise ist die Führungsschiene als Standardführungsschiene, insbesondere aus Stahl, oder spezielles Strangpressprofil, insbesondere aus Aluminium, ausgebildet. Ferner ist vorteilhaft, wenn die Tragestrukturen als Fräs- oder Gussteile ausgebildet sind.

Mit der Erfindung kann auch auch ein Baukastensystem bereitgestellt werden, umfassend verschieden lang, hoch und/oder breit ausgebildete Führungsschienen und/oder verschieden lang, hoch und/oder breit ausgebildete Tragestrukturen und/oder verschiedenartig ausgebildete Verbindungsteile derart, dass je nach Anforderung eine Führungseinheit mit geeigneten Abmessungen zur Verfügung gestellt werden kann.

Vorteilhafterweise sind Verbindungsmittel zur Befestigung der Führungsschienen auf den Tragestrukturen und/oder zur Befestigung der Verbindungsteilen an den Tragestrukturen vorgesehen sind. Die Verbindungsmittel können dabei als lösbare oder unlösbare Schraubenverbindungen, Nietverbindungen, Klemmverbindungen und/oder Rastverbindungen ausgebildet sein.

Je nach Anforderung können die Führungsschienen, welche insbesondere aus Stahl sein können, aus einem anderen Material hergestellt sein als die Tragestrukturen und/oder die Verbindungsteile, welche beide beispielsweise aus Metall- oder Kunststoffgussteilen hergestellt sein können.

Weitere Vorteile und vorteilhafte Ausgestaltungen der Erfindung sind der nachfolgenden Beschreibung zu entnehmen, anhand derer das in den Figuren dargestellte Ausführungsbeispiel der Erfindung näher beschrieben und erläutert ist.

Es zeigen:
- Figur 1: eine erfindungsgemäße Führungseinheit in einer Vormontageposition;
- Figur 2: die Führungseinheit gemäß Figur 1 in Endmontageposition;
- Figur 3: eine Draufsicht auf eine zweite erfindungsgemäße Führungseinheit;
- Figur 4: die Seitenansicht gemäß Figur 3;
- Figur 5: eine Draufsicht auf eine dritte erfindungsgemäße Führungseinheit; und
- Figur 6: eine Draufsicht auf eine vierte erfindungsgemäße Führungseinheit.

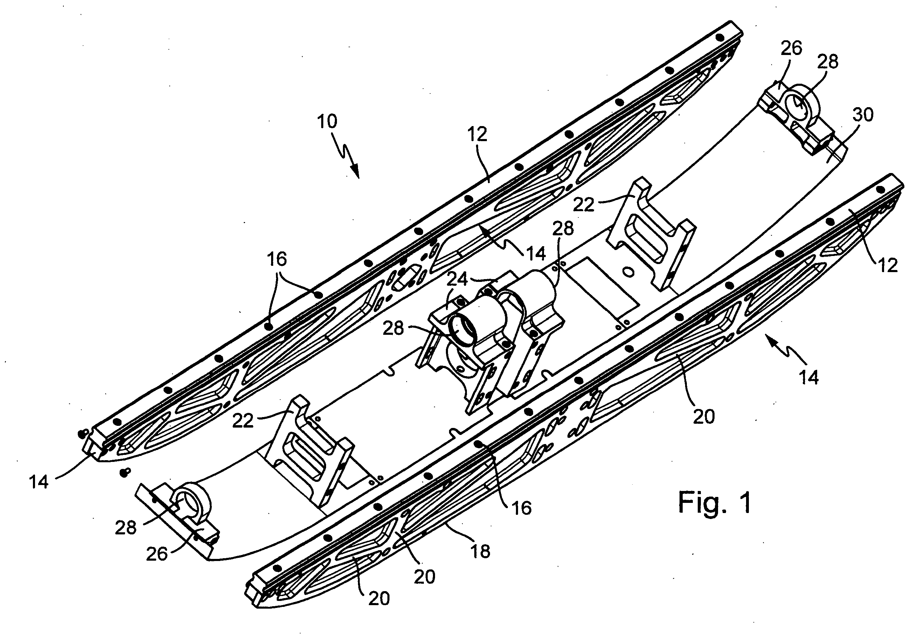

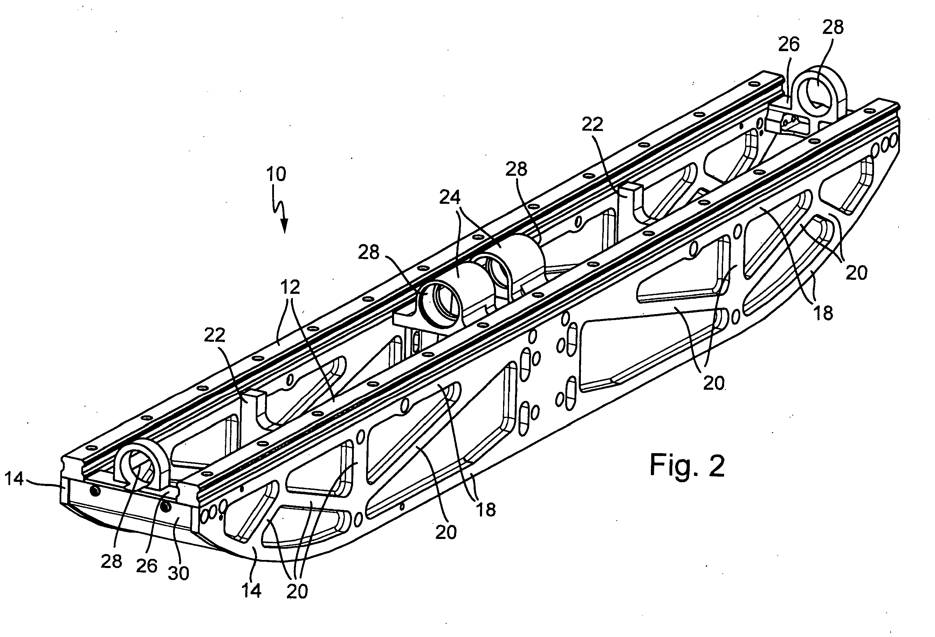

Die in den Figuren 1 und 2 dargestellte Führungseinheit 10 umfasst zwei einen in Längsrichtung konstanten Querschnitt aufweisende Führungsschienen 12, die jeweils auf einer als Flachelement ausgebildeten, fachwerkartigen Tragestruktur 14 angeordnet sind. Zur dauerhaften Befestigung der Führungsschienen 12 können diese insbesondere mittels Schrauben 16 an den Tragestrukturen 14 angeschraubt sein.

Die Tragestrukturen 14 sehen einen umlaufenden Rahmen 18 sowie im Rahmen vorgesehene, senkrecht und schräg zu den Führungsschienen 12 verlaufende Verstrebungen 20 vor. Die Tragestrukturen 14 sind dadurch gewichtsoptimiert ausgebildet.

Zur Fixierung der relativen Lage der beiden Tragestrukturen 14 sind die Tragestrukturen 14 miteinander verbindende Verbindungsteile 22, 24 und 26 vorgesehen. Die Verbindungsteile 22, 24 und 26 sind quer beziehungsweise senkrecht zur Längsrichtung der Tragestrukturen 14 beziehungsweise Führungsschienen 12 angeordnet. Da die Verbindungsteile 22, 24, 26 eine gleiche Breite vorsehen, verlaufen die Führungsschienen 12 im montierten Zustand der Führungseinheit 10, wie sie in Figur 2 dargestellt ist, parallel zueinander. Die Verbindungsteile 22, 24, 26 sind jeweils mit geeigneten Schrauben an den Tragestrukturen 14 befestigt.

Während die Verbindungsteile 22 ausschließlich zur Verbindung der beiden Tragestrukturen 14 dienen, haben die Verbindungsteile 24 und 26 weitere Funktionen. Die Verbindungsteile 24 und 26 sehen jeweils eine Aufnahme beziehungsweise Aussparung 28 vor, die insbesondere zur Aufnahme eines Lagers einer Spindel eines Spindelantriebs geeignet sind. Ein Antrieb, der insbesondere als elektromotorischer oder pneumatischer Antrieb ausgebildet sein kann, befindet sich vorzugsweise im Bauraum zwischen den beiden Tragestrukturen. Über das Vorsehen einer Spindel können beispielsweise Bearbeitungstische und/oder Backen, die in den Figuren nicht dargestellt sind, entlang den Führungsschienen 12 bewegt werden.

Die in den Figuren 1 und 2 dargestellte Führungseinheit umfasst zudem eine Abdeckung 30, die als Blechteil ausgebildet ist. Die Abdeckung 30 deckt den zwischen den Tragestrukturen 14 vorhandenen Bauraum auf der der Führungsschiene 12 abgewandten Seite ab. Die Abdeckung 30 kann dabei insbesondere an den Verbindungsteilen 22, 24 und 26 befestigt sein, beispielsweise mittels Schraubverbindungen.

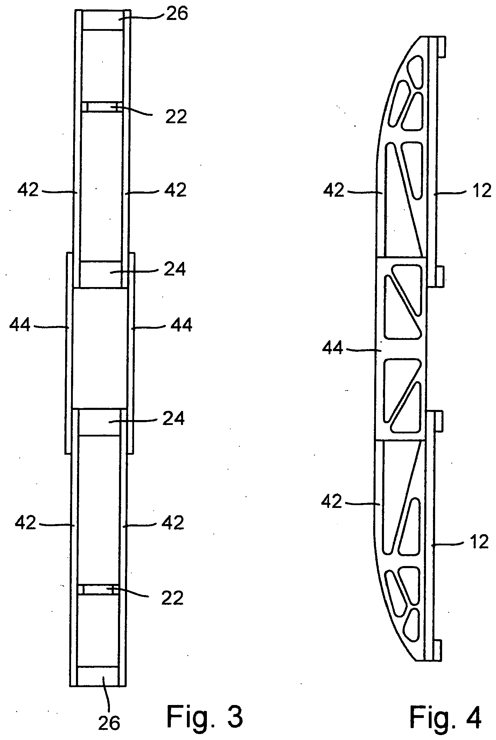

Bei der in der Figur 3 und 4 dargestellten Führungseinheit 40 sind insgesamt vier Tragestrukturen 42 vorgesehen, wobei eine Tragestruktur 42 einer mittig geteilten Tragestruktur 14, wie sie in den Figuren 1 und 2 dargestellt ist, entspricht. Dabei sind jeweils zwei Tragestrukturen 42 durch Verbindungsteile 22, 24 und 26 miteinander verbunden. Die jeweils über die zugehörigen Verbindungsteile 22, 24, 26 miteinander verbundenen Tragestrukturen 42 sind über Zwischenteile 44 miteinander verbunden. Wie in der Ansicht gemäß Figur 4 deutlich wird, ist auf jeder Tragestruktur 42 eine Führungsschiene 12 vorgesehen. Zur Realisierung einer Greifvorrichtung kann insbesondere zwischen den jeweils parallel zueinander angeordneten Tragestrukturen 42 jeweils ein Antrieb für eine auf den jeweils parallelen, einander gegenüberliegenden Führungsschienen verfahrbare Backe vorgesehen sein. Um die beiden Backen aufeinander zu beziehungsweise voneinander weg zu verfahren, werden die Antriebe entsprechend synchron angesteuert. Je nach Größe der zu greifenden Gegenstände können die Zwischenteile 44 entsprechend lang ausgebildet sein.

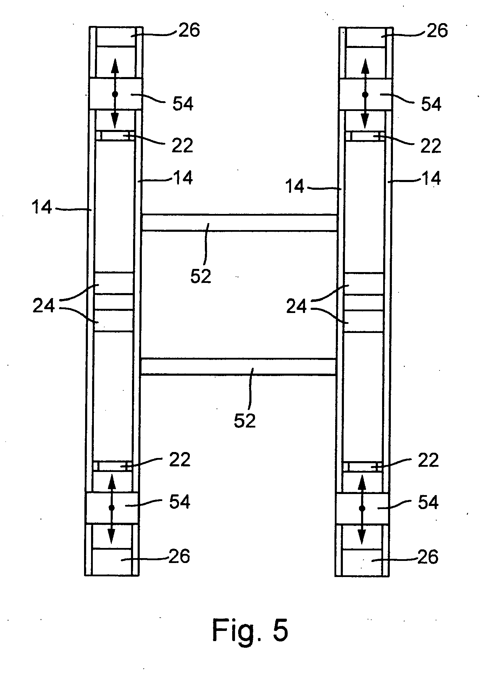

Bei der in der Figur 5 dargestellten Führungseinheit 50 sind zwei Führungseinheiten 10, wie sie in der Figur 1 und 2 dargestellt sind, über Verbindungselemente 52 parallel zueinander verlaufend angeordnet. Hierdurch können beispielsweise zwei aufeinander zu und voneinander weg bewegbare Greifmittel jeweils von zwei Backen, die mit dem Bezugszeichen 54 angedeutet sind, mit zugehörigen Antrieben, die synchron angesteuert werden, angetrieben werden. Dadurch können vergleichsweise große Greifmittel parallel geführt angetrieben werden.

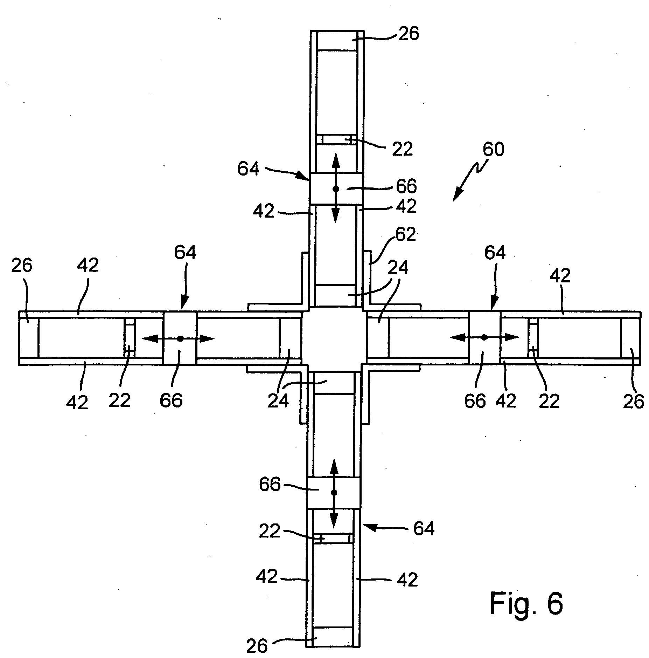

Bei der in der Figur 6 dargestellten Führungseinheit 60 sind an einem Zentralteil 62 insgesamt vier Baugruppen 64 jeweils um 90° versetzt zueinander angeordnet, wobei eine Baugruppe 64 von zwei parallel verlaufenden Tragestrukturen 42, die über Verbindungselemente 22, 24, 26 miteinander verbunden sind, gebildet wird. Jede Baugruppe 64 umfasst einen eigenen Antrieb, der zum Betreiben einer auf den jeweiligen Führungsschienen 12 verfahrbaren Backe 54, 66 dient. Durch synchrones Ansteuern der jeweiligen Antriebe kann ein Vier-Backen-Zentrisch-Greifer realisiert werden.

Selbstverständlich ist denkbar, anstelle des Zentralteils 62 ein anderes Zentralteil vorzusehen, welches zur Anordnung von drei Baugruppen 64 dient, wobei diese Baugruppen dann jeweils um 120° versetzt zueinander angeordnet sind.

synchrones Ansteuern der jeweiligen Antriebe kann ein Vier-Backen-Zentrisch-Greifer realisiert werden.

Selbstverständlich ist denkbar, anstelle des Zentralteils 62 ein anderes Zentralteil vorzusehen, welches zur Anordnung von drei Baugruppen 64 dient, wobei diese Baugruppen dann jeweils um 120° versetzt zueinander angeordnet sind.

## Patentansprüche

1. Führungseinheit (10, 40, 50, 60) eines Handhabungsmoduls, insbesondere eines Linearantriebs, einer Greif- oder Spannvorrichtung, mit mindestens zwei als Flachelemente ausgebildeten Tragestrukturen (14, 42), mit mindestens zwei zueinander parallel verlaufenden, auf jeweils einer Tragestruktur (14, 42) angeordneten Führungsschienen (12), und mit die beiden Tragestrukturen (14) miteinander verbindenden Verbindungsteilen (22, 24, 26),
wobei eine Antriebseinheit im Bereich zwischen den jeweils parallel verlaufenden Führungsschienen (12) und/oder Tragestrukturen (14, 42) anordenbar ist,
**dadurch gekennzeichnet,**
**dass** die Tragestrukturen (14, 42) als separate Bauteile ausgebildet sind,
**dass** die Verbindungsteile (22, 24, 26) als separate Bauteile ausgebildet sind, die senkrecht zu den Tragestrukturen (14, 42) und senkrecht zur Längsrichtung der Führungsschienen (12) angeordnet sind,
wobei Verbindungsteile (22) vorgesehen sind, die ausschließlich zur Verbindung der beiden Tragestrukturen (14) dienen und
wobei Verbindungsteile (24, 26) vorgesehen sind, die zur Halterung der Antriebseinheit oder von Teilen davon ausgebildet sind..

2. Führungseinheit (10, 40, 50, 60) nach Anspruch 1, **dadurch gekennzeichnet, dass** die Tragestrukturen (42, 14) und/oder die Verbindungsteile (22, 24, 26) als fachwerkartige Flachelemente ausgebildet sind.

3. Führungseinheit (40, 60) nach wenigstens einem der vorhergehenden Ansprüche, **dadurch gekennzeichnet, dass** jeweils zwei oder mehrere Tragestrukturen (14, 42) und/oder Führungsschienen (12) hintereinander entlang einer Linie angeordnet sind.

4. Führungseinheit (40, 60) nach Anspruch 3, **dadurch gekennzeichnet, dass** zwischen den jeweils entlang einer Linie angeordneten Tragestrukturen (14, 42) und/oder Führungsschienen (12) eine Antriebseinheit oder ein Zwischenteil (44, 62) vorgesehen ist.

5. Führungseinheit (10, 40, 50, 60) nach wenigstens einem der vorhergehenden Ansprüche, **dadurch gekennzeichnet, dass** auf der den Führungsschienen (12) abgewandten Seite an den Tragestrukturen (14, 42) eine den zwischen den parallel zueinander verlaufenden Tragestrukturen (14, 42) liegenden Zwischenraum abdeckende Abdeckung (30) vorgesehen ist.

6. Führungseinheit (10, 40, 50, 60) nach wenigstens einem der vorhergehenden Ansprüche, **dadurch gekennzeichnet, dass** die Führungsschienen (12) als Strangpressprofile und/oder dass die Tragestrukturen (14) als Fräs- oder Gussteile ausgebildet sind.

7. Führungseinheit (10, 40, 50, 60) nach wenigstens einem der vorhergehenden Ansprüche, **dadurch gekennzeichnet, dass** Verbindungsmittel zur Befestigung der Führungsschienen (12) auf den Tragestrukturen (14, 42) und/oder zur Befestigung der Verbindungsteilen (22, 24, 26) an den Tragestrukturen (14, 42) vorgesehen sind.

8. Führungseinheit (10, 40, 50, 60) nach Anspruch 7, **dadurch gekennzeichnet, dass** die Verbindungsmittel als lösbare oder unlösbare Schraubenverbindungen, Nietverbindungen, Klemmverbindungen und/oder Rastverbindungen ausgebildet sind.

9. Führungseinheit (10, 40, 50, 60) nach wenigstens einem der vorhergehenden Ansprüche, **dadurch gekennzeichnet, dass** die Führungsschienen (12) aus einem anderen Material als die Tragestrukturen (42, 14) und/oder die Verbindungsteile (22, 24, 26) sind.

## Claims

1. Guide unit (10, 40, 50, 60) of a handling module, in particular a linear drive, of a gripping or clamping device, comprising at least two support structures (14, 42) designed as planar elements, comprising at least two guide rails (12) which are each arranged on a support structure (14, 42) and extend parallel to each other, and comprising connecting parts (22, 24, 26) which interconnect the two support structures (14),
it being possible to arrange a drive unit in the region between the guide rails (12) and/or support structures (14, 42), which rails and structures each extend in parallel,
**characterized in that**
the support structures (14, 42) are designed as separate components,
the connecting parts (22, 24, 26) are designed as separate components which are arranged perpendicular to the support structures (14, 42) and perpendicular to the longitudinal direction of the guide rails (12),
connecting parts (22) being provided which are used exclusively to connect the two support structures (14) and
connecting parts (24, 26) being provided which are designed to hold the drive unit or parts thereof.

2. Guide unit (10, 40, 50, 60) according to claim 1, **characterized in that** the support structures (42, 14) and/or the connecting parts (22, 24, 26) are designed as truss-like planar elements.

3. Guide unit (40, 60) according to at least one of the preceding claims, **characterized in that** two or more support structures (14, 42) and/or guide rails (12) are each arranged along a line one behind the other.

4. Guide unit (40, 60) according to claim 3, **characterized in that** a drive unit or an intermediate part (44, 62) is provided between the support structures (14, 42) and/or guide rails (12) that are each arranged along a line.

5. Guide unit (10, 40, 50, 60) according to at least one of the preceding claims, **characterized in that**, on the side facing away from the guide rails (12), a cover (30) is provided on the support structures (14, 42) that covers the intermediate space located between the support structures (14, 42) extending parallel to each other.

6. Guide unit (10, 40, 50, 60) according to at least one of the preceding claims, **characterized in that** the guide rails (12) are designed as extruded profiles and/or the support structures (14) are designed as milled or cast parts.

7. Guide unit (10, 40, 50, 60) according to at least one of the preceding claims, **characterized in that** connecting means are provided for fastening the guide rails (12) to the support structures (14, 42) and/or for fastening the connecting parts (22, 24, 26) to the support structures (14, 42).

8. Guide unit (10, 40, 50, 60) according to claim 7, **characterized in that** the connecting means are designed as releasable or permanent screw connections, rivet connections, clamping connections and/or latching connections.

9. Guide unit (10, 40, 50, 60) according to at least one of the preceding claims, **characterized in that** the guide rails (12) are made of a different material than the support structures (42, 14) and/or the connecting parts (22, 24, 26).

## Revendications

1. Unité de guidage (10, 40, 50, 60) d'un module de manipulation, en particulier d'un entraînement linéaire, d'un dispositif de préhension ou de serrage, comprenant au moins deux structures de support (14, 42) réalisées sous la forme d'éléments plats, au moins deux rails de guidage (12) s'étendant parallèlement l'un à l'autre et agencés sur respectivement une structure de support (14, 42), et des pièces de liaison (22, 24, 26) reliant les deux structures de support (14) l'une à l'autre, dans lequel une unité d'entraînement peut être agencée dans la zone située entre les rails de guidage (12) et/ou les structures de support (14, 42) s'étendant respectivement parallèlement,
**caractérisée**
**en ce que** les structures de support (14, 42) sont réalisées sous la forme d'éléments séparés,
**en ce que** les pièces de liaison (22, 24, 26) sont réalisées sous la forme d'éléments qui sont agencés perpendiculairement aux structures de support (14, 42) et perpendiculairement à la direction longitudinale des rails de guidage (12),
dans lequel des pièces de liaison (22) sont prévues, qui servent exclusivement à relier les deux structures de support (14) et
dans lequel des pièces de liaison (24, 26) sont prévues, qui sont conçues pour retenir l'unité d'entraînement ou des parties de celles-ci.

2. Unité de guidage (10, 40, 50, 60) selon la revendication 1, **caractérisée en ce que** les structures de support (42, 14) et/ou les pièces de liaison (22, 24, 26) sont réalisées sous la forme d'éléments plats en treillis.

3. Unité de guidage (40, 60) selon au moins l'une des revendications précédentes, **caractérisée en ce que** respectivement deux structures de support (14, 42) et/ou rails de guidage (12) ou plus sont agencés les uns derrière les autres le long d'une ligne.

4. Unité de guidage (40, 60) selon la revendication 3, **caractérisée en ce qu'**une unité d'entraînement ou une pièce intermédiaire (44, 62) est prévue entre les structures de support (14, 42) et/ou les rails de guidage (12) agencés respectivement le long d'une ligne.

5. Unité de guidage (10, 40, 50, 60) selon au moins l'une des revendications précédentes, **caractérisée en ce qu'**un cache (30) recouvrant l'espace intermédiaire situé entre les structures de support (14, 42) s'étendant parallèlement l'une à l'autre est prévu sur les structures de support (14, 42) sur la face opposée aux rails de guidage (12).

6. Unité de guidage (10, 40, 50, 60) selon au moins l'une des revendications précédentes, **caractérisée en ce que** les rails de guidage (12) sont réalisés sous la forme de profilés extrudés et/ou **en ce que** les structures de support (14) sont réalisées sous la forme de pièces fraisées ou coulées.

7. Unité de guidage (10, 40, 50, 60) selon au moins l'une des revendications précédentes, **caractérisée en ce que** des moyens de liaison sont destinés à fixer les rails de guidage (12) sur les structures de support (14, 42) et/ou à fixer les pièces de liaison (22, 24, 26) aux structures de support (14, 42) .

8. Unité de guidage (10, 40, 50, 60) selon la revendication 7, **caractérisée en ce que** les moyens de liaison sont réalisés sous la forme de liaisons par vissage, de liaisons par rivetage, de liaisons par serrage et/ou de liaisons par encliquetage libérables ou non libérables.

9. Unité de guidage (10, 40, 50, 60) selon au moins l'une des revendications précédentes, **caractérisée en ce que** les rails de guidage (12) sont composés d'un matériau différent de celui des structures de support (42, 14) et/ou des pièces de liaison (22, 24, 26).
